# EUROPÄISCHE PATENTSCHRIFT

(11) **EP 4 648 880 B1**
(45) Veröffentlichungstag und Bekanntmachung des Hinweises auf die Patenterteilung: **11.11.2026**
(21) Anmeldenummer: 23820879.7
(22) Anmeldetag: 07.12.2023
(51) Int. Cl.: B01D 46/10, B01D 46/62

(54) **FILTERELEMENT UND FILTERSYSTEM**
FILTER ELEMENT AND FILTER SYSTEM
ÉLÉMENT FILTRANT ET SYSTÈME DE FILTRATION

(30) Priorität: 09.01.2023 DE 102023100329
(43) Veröffentlichungstag der Anmeldung: 19.11.2025
(73) Patentinhaber: MANN+HUMMEL GmbH, 71636 Ludwigsburg (DE)
(72) Erfinder: JURGENSON, Sören, 71636 Ludwigsburg (DE)
(74) Vertreter: Mann + Hummel Intellectual Property
(86) Internationale Anmeldenummer: PCT/EP2023/084707
(87) Internationale Veröffentlichungsnummer: WO 2024/149532

(56) Entgegenhaltungen:
- DE-A1- 102013 009 746
- DE-A1- 102020 128 911
- US-A1- 2013 239 531

## Beschreibung

### Technisches Gebiet

Die Erfindung betrifft ein Filterelement, insbesondere Sekundärelement, zum Filtern eines Fluids mit wenigstens einem Filtermediumkörper, insbesondere zur Verwendung in einer Brennkraftmaschine oder als Innenraumluftfilter, insbesondere eines Kraftfahrzeugs sowie ein Filtersystem mit einem austauschbaren Filterelement.

### Stand der Technik

Filterelemente, insbesondere als Sekundärelemente oder Sicherheitselemente eingesetzte Filterelemente, dichten, insbesondere bei einem Wechsel des Hauptfilterelements eines Filtersystems, die Reinseite gegen die Rohseite des Filtersystems ab. Dabei ist es wichtig, dass das Sekundärelement bei einem Öffnen des Filtergehäuses zum Austausch des Hauptfilterelements zuverlässig abdichtend an seinem Einbauort bleibt. Die Sekundärelemente verbleiben nach der Demontage des Gehäuseoberteils und des Hauptfilterelements (Sekundärelement und Hauptfilterelement sind in der Regel übereinander angeordnet) in der Position und beugen einer Beschädigung des Motors vor.

Bei Filterelementen, insbesondere bei als Sekundärelemente eingesetzten Flachfilterelementen, werden häufig radial abdichtende Schnittstellen zum Abdichten des Filterelements im Filtergehäuse eingesetzt. Dabei stützt ein quer zur Strömungsrichtung angeordnetes Gitter die Dichtung in radialer Richtung ab. Bei großen Bauräumen muss das Gitter entsprechend stark ausgebildet werden, um der Deformation entgegen wirken zu können und dennoch die notwendige Dichtheit zu gewährleisten.

DE 10 2016 006 607 A1 beschreibt ein Filtersystem, bei welchem zum Abdichten des Filterelements eine freigeschäumte axiale Dichtung eingesetzt wird. Die Dichtung ist so gestaltet, dass dabei verhindert werden kann, dass im eingebauten Zustand die Dichtung aus einer entsprechenden gehäuseseitigen Dichtungskammer herausgezogen werden kann.

Aus der DE 10 2013 009 746 A1, US 2013/239531 A1 sowie DE 10 2020 128 911 A1 sind weitere gattungsbildende Filterelemente bekannt.

### Offenbarung der Erfindung

Eine Aufgabe der Erfindung ist es, ein Filterelement, insbesondere Sekundärelement, zum Filtern eines Fluids mit wenigstens einem Filtermediumkörper mit einer Dichtung zu schaffen, welches in einem Filtergehäuse einfach und sicher montierbar ist.

Eine weitere Aufgabe ist es, ein Filtersystem mit einem solchen Filterelement zu schaffen, welches einfach und sicher montierbar ist.

Die vorgenannte Aufgabe wird nach einem Aspekt der Erfindung gelöst von einem Filterelement, insbesondere Sekundärelement, zum Filtern eines Fluids mit wenigstens einem Filtermediumkörper, welcher eine auf einem äußeren Umfang des Filtermediumkörpers umlaufende Dichtung zur axialen Abdichtung bei bestimmungsgemäßer Montage in einer axialen Richtung in einem Filtergehäuse eines Filtersystems aufweist, wobei die Dichtung einen Teil einer im Wesentlichen in axialer Richtung formschlüssig sichernden Verbindungseinrichtung aufweist, welche zu einem anderen Teil der Verbindungseinrichtung an dem Filtergehäuse korrespondierend ausgebildet ist.

Die weitere Aufgabe wird nach einem weiteren Aspekt der Erfindung gelöst von einem Filtersystem zum Filtern eines Fluids mit einem Filtergehäuse und wenigstens einem in dem Filtergehäuse zwischen einer Rohseite und einer Reinseite austauschbar angeordneten Filterelement, insbesondere Sekundärelement, zum Filtern eines Fluids, mit wenigstens einem Filtermediumkörper, wobei das Filtergehäuse eine umlaufende Dichtnut aufweist, in welcher bei bestimmungsgemäßer Montage des Filterelements eine Dichtung des Filterelements aufgenommen ist, wobei die Dichtnut des Filtergehäuses wenigstens einen Teil einer im Wesentlichen in axialer Richtung formschlüssig sichernden Verbindungseinrichtung aufweist, die zu einem anderen Teil der Verbindungseinrichtung an dem wenigstens einen Filterelement korrespondierend ausgebildet ist, insbesondere wobei die Verbindungseinrichtung als Rastverbindung ausgebildet ist.

Günstige Ausgestaltungen und Vorteile der Erfindung ergeben sich aus den weiteren Ansprüchen, der Beschreibung und der Zeichnung.

Es wird ein Filterelement, insbesondere Sekundärelement, zum Filtern eines Fluids mit wenigstens einem Filtermediumkörper vorgeschlagen, welcher eine auf einem äußeren Umfang des Filtermediumkörpers umlaufende Dichtung zur axialen Abdichtung bei bestimmungsgemäßer Montage in einer axialen Richtung in einem Filtergehäuse eines Filtersystems aufweist. Dabei weist die Dichtung einen Teil einer im Wesentlichen in axialer Richtung formschlüssig sichernden Verbindungseinrichtung auf, welche zu einem anderen Teil der Verbindungseinrichtung an dem Filtergehäuse korrespondierend ausgebildet ist.

Unter einer "axialen Richtung" wird hierin eine zur Hauptdurchströmungsrichtung des Filterelements parallele Richtung verstanden.

Unter "formschlüssig" wird hierin verstanden, dass der an der Dichtung angeordnete Teil der im Wesentlichen in axialer Richtung sichernden Verbindungseinrichtung dazu ausgelegt ist, in Zusammenwirkung mit dem an dem Filtergehäuse vorliegenden anderen Teil der Verbindungseinrichtung das Filterelement bezüglich der Axialrichtung durch die unmittelbare Übertragung von Haltekräften, welche in Axialrichtung verlaufen oder zumindest eine Axialkomponente aufweisen, gegenüber dem Filtergehäuse zu fixieren. Im Gegensatz hierzu steht eine "kraftschlüssige" Haltewirkung, wie aus dem Stand der Technik bekannt, gemäß der der Austausch der Haltekräfte normal bzw. senkrecht zur Axialrichtung erfolgt.

Der an der Dichtung vorliegende Teil der im Wesentlichen in axialer Richtung formschlüssig sichernden Verbindungseinrichtung ist in Ausführungen insbesondere einteilig mit der Dichtung ausgebildet, insbesondere materialeinstückig. Insbesondere kann der Teil der im Wesentlichen in axialer Richtung formschlüssig sichernden Verbindungseinrichtung mit der Dichtung zusammen in einem Urformverfahren, insbesondere Gießen bzw. Spritzgießen, erzeugt werden.

Das vorgeschlagene Filterelement stellt ein Luftfilterelement dar, welches insbesondere als Sekundärelement oder Sicherheitselement eingesetzt wird. Dabei dichtet das Sekundärelement bei einem Wechsel des Hauptfilterelements eines Filtersystems die Reinseite gegen die Rohseite ab. Vorteilhaft verbleibt das Sekundärelement bei einem Öffnen des Filtergehäuses zum Austausch des Hauptfilterelements zuverlässig abdichtend an seinem Einbauort.

Der Filtermediumkörper kann ein cellulosebasiertes und/oder synthetisches Vlies-Medium umfassen und mit einer insbesondere direkt an den Filtermediumkörper angeschäumten Polyurethandichtung (PUR-Dichtung) als Filterelement ausgebildet sein.

Dabei ist die Polyurethandichtung bei dem vorgeschlagenen Filterelement vorteilhaft in der Form ausgestaltet, dass diese in eine Gehäuseschnittstelle eingreift bzw. mit dieser verschnappt.

Das Filterelement kann insbesondere bei Flachluftfilterelementen im Bereich von Nutzfahrzeugen zum Einsatz kommen. Das Filterelement weist eine axiale Dichtung anstatt einer radialen Dichtung auf und ermöglicht eine standardisierte Gehäusekontur sowohl im Bereich des Sicherheitselements als auch im Bereich des Hauptelements. Beispielsweise kann eine zusätzliche Arretierungsnase an der Dichtung in das Gehäuse eingreifen, wodurch das Filterelement bei einem Wechsel des Hauptelements an seiner dichtenden Position gehalten wird.

Nachteile von radialen Dichtungskonzepten, welche eine hohe Verpresskraft und Fügekraft aufgrund einer hohen Reibung durch die Paarung des PUR-Schaums mit dem Gehäuse aufweisen, können mit einer axialen Dichtung umgangen werden. Dieselbe Dichtungskontur kann außerdem sowohl am Sicherheitselement wie am Hauptelement angewendet werden, wodurch sich deutliche Vorteile für eine Standardisierung bei der Konstruktion ergeben.

Gemäß einer vorteilhaften Ausgestaltung des Filterelements kann der Teil der Verbindungseinrichtung an der Dichtung als Teil einer Rastverbindung ausgebildet sein. Dadurch kann das Filterelement bei einem Wechsel des Hauptelements an seiner dichtenden Position gehalten werden.

An der Dichtung des Filterelements ist eine Mehrzahl von schräg, insbesondere senkrecht, zu der axialen Richtung ragende Rastelemente angeordnet. Insbesondere können die Rastelemente als schräg, insbesondere senkrecht, zu der axialen Richtung hervorstehende Noppen oder Vertiefungen ausgebildet sein. Noppen am Filterelement und Vertiefungen am Filtergehäuse können günstigerweise ineinandergreifen, so dass das Filterelement zuverlässig an seinem Platz gehalten wird.

Gemäß einer vorteilhaften Ausgestaltung des Filterelements kann der Teil der Verbindungseinrichtung an der Dichtung an wenigsten zwei einander gegenüberliegenden Seiten des Filtermediumkörpers vorliegen. Insbesondere können dabei bevorzugt an wenigsten zwei einander gegenüberliegenden Seiten des Filtermediumkörpers wenigstens zwei Rastelemente angeordnet sein. Dadurch kann das Filterelement bei einem Wechsel des Hauptelements an seiner dichtenden Position gehalten werden.

Gemäß einer vorteilhaften Ausgestaltung des Filterelements kann der Teil der Verbindungseinrichtung an der Dichtung eine schräg, insbesondere senkrecht, zu der axialen Richtung verlaufende Erhebung mit einem Hinterschnitt aufweisen, welcher zur Wirkverbindung mit dem anderen Teil der Verbindungseinrichtung an dem Filtergehäuse ausgebildet ist. Der andere Teil der Verbindungseinrichtung an dem Filtergehäuse kann hierbei eine schräg, insbesondere senkrecht, zu der axialen Richtung hervorstehende Rippe aufweisen, die jenseits der Erhebung in dem Hinterschnitt aufnehmbar ist. Auch mit einer solchen Kombination der Verbindungseinrichtung an Dichtung und Filtergehäuse kann das Filterelement bei einem Wechsel des Hauptelements an seiner dichtenden Position gehalten werden.

Gemäß einer vorteilhaften Ausgestaltung des Filterelements kann die Erhebung wenigstens bereichsweise auf dem äußeren Umfang der Dichtung umlaufend ausgebildet sein. Die bereichsweise Anordnung der Dichtungseinrichtung kann ausreichend sein, um das Filterelement bei einem Wechsel des Hauptelements an seiner dichtenden Position zu halten.

Gemäß einer vorteilhaften Ausgestaltung des Filterelements kann der Teil der Verbindungseinrichtung an der Dichtung eine wenigstens bereichsweise umlaufende, in axialer Richtung vertiefte Nut aufweisen, welche zur Wirkverbindung mit dem anderen Teil der Verbindungseinrichtung an dem Filtergehäuse ausgebildet ist. Alternativ kann der Teil der Verbindungseinrichtung an der Dichtung eine wenigstens bereichsweise umlaufende, in axialer Richtung von der Dichtung weg ragende Rippe aufweisen. Auch mit einer solchen Kombination der Verbindungseinrichtung an Dichtung und Filtergehäuse kann das Filterelement bei einem Wechsel des Hauptelements an seiner dichtenden Position gehalten werden.

Gemäß einer vorteilhaften Ausgestaltung des Filterelements können die Nut und/oder die Rippe einen Hinterschnitt aufweisen. Auf diese Weise kann eine besonders sichere Fixierung des Filterelements in seiner Position erreicht werden.

Nach einem weiteren Aspekt der Erfindung wird ein Filtersystem zum Filtern eines Fluids vorgeschlagen, mit einem Filtergehäuse und wenigstens einem in dem Filtergehäuse austauschbar angeordneten Filterelement, insbesondere Sekundärelement, zum Filtern eines Fluids, mit wenigstens einem Filtermediumkörper. Das Filtergehäuse weist eine umlaufende Dichtnut auf, in welcher bei bestimmungsgemäßer Montage des Filterelements eine Dichtung des Filterelements aufgenommen ist. Dabei weist die Dichtnut des Filtergehäuses wenigstens einen Teil einer im Wesentlichen in axialer Richtung formschlüssig sichernden Verbindungseinrichtung auf, die zu einem anderen Teil der Verbindungseinrichtung an dem wenigstens einen Filterelement korrespondierend ausgebildet ist. Insbesondere kann die Verbindungseinrichtung als Rastverbindung ausgebildet sein.

Vorteilhaft weist das vorgeschlagene Filtersystem ein Luftfilterelement auf, welches insbesondere als Sekundärelement oder Sicherheitselement eingesetzt wird. Dabei dichtet das Sekundärelement bei einem Wechsel des Hauptfilterelements des Filtersystems die Reinseite gegen die Rohseite ab. Vorteilhaft verbleibt das Sekundärelement bei einem Öffnen des Filtergehäuses zum Austausch des Hauptfilterelements zuverlässig abdichtend an seinem Einbauort.

Dabei ist die Polyurethandichtung vorteilhaft in der Form ausgestaltet, dass diese in eine Gehäuseschnittstelle eingreift bzw. mit dieser verschnappt.

Das Filtersystem kann insbesondere im Bereich von Nutzfahrzeugen zum Einsatz kommen. Das Filterelement weist eine axiale Dichtung anstatt einer radialen Dichtung auf und ermöglicht eine standardisierte Gehäusekontur sowohl im Bereich des Sicherheitselements als auch im Bereich des Hauptelements. Beispielsweise kann eine zusätzliche Arretierungsnase an der Dichtung in das Gehäuse eingreifen, wodurch das Filterelement bei einem Wechsel des Hauptelements an seiner dichtenden Position gehalten wird.

Nachteile von radialen Dichtungskonzepten, welche eine hohe Verpresskraft und Fügekraft auf Grund einer hohen Reibung durch die Paarung des PUR-Schaums mit dem Gehäuse aufweisen, können mit einer axialen Dichtung umgangen werden. Dieselbe Dichtungskontur kann außerdem sowohl am Sicherheitselement wie am Hauptelement angewendet werden, wodurch sich deutliche Vorteile für eine Standardisierung bei der Konstruktion des Filtersystems ergeben.

Gemäß einer vorteilhaften Ausgestaltung des Filtersystems kann der Teil der Verbindungseinrichtung an dem Filtergehäuse eine Mehrzahl von schräg, insbesondere senkrecht, zu der axialen Richtung ragende Rastelemente aufweisen, welche zur Wirkverbindung mit dem anderen Teil der Verbindungseinrichtung an dem Filterelement ausgebildet sind. Dadurch kann das Filterelement bei einem Wechsel des Hauptelements an seiner dichtenden Position gehalten werden.

Gemäß einer vorteilhaften Ausgestaltung des Filtersystems können die Rastelemente als schräg, insbesondere senkrecht, zu der axialen Richtung hervorstehende Vertiefungen oder Noppen ausgebildet sein. Dadurch kann das Filterelement bei einem Wechsel des Hauptelements günstigerweise an seiner dichtenden Position gehalten werden.

Gemäß einer vorteilhaften Ausgestaltung des Filtersystems kann der Teil der Verbindungseinrichtung an dem Filtergehäuse eine schräg, insbesondere senkrecht, zu der axialen Richtung verlaufende Rippe aufweisen, welche zur Wirkverbindung mit dem anderen Teil der Verbindungseinrichtung an dem Filterelement ausgebildet ist. Alternativ kann der Teil der Verbindungseinrichtung eine schräg, insbesondere senkrecht, zu der axialen Richtung verlaufende Erhebung mit Hinterschnitt aufweisen. Auch mit einer solchen Kombination der Verbindungseinrichtung an Dichtung und Filtergehäuse kann das Filterelement bei einem Wechsel des Hauptelements an seiner dichtenden Position gehalten werden.

Gemäß einer vorteilhaften Ausgestaltung des Filtersystems können die Rippe und/oder die Erhebung wenigstens bereichsweise umlaufend ausgebildet sein. Die bereichsweise Anordnung der Dichtungseinrichtung kann ausreichend sein, um das das Filterelement bei einem Wechsel des Hauptelements an seiner dichtenden Position zu halten.

Gemäß einer vorteilhaften Ausgestaltung des Filtersystems kann der Teil der Verbindungseinrichtung an dem Filtergehäuse eine wenigstens bereichsweise umlaufende, in axialer Richtung hervorstehende Rippe aufweisen, welche zur Wirkverbindung mit dem anderen Teil der Verbindungseinrichtung an dem Filterelement ausgebildet ist. Alternativ kann der Teil der Verbindungseinrichtung an dem Filtergehäuse eine wenigstens bereichsweise umlaufende, in axialer Richtung vertiefte Nut aufweisen. Insbesondere können dabei Ecken der Dichtnut frei von der Verbindungseinrichtung sein. Auch mit einer solchen Kombination der Verbindungseinrichtung an Dichtung und Filtergehäuse kann das Filterelement bei einem Wechsel des Hauptelements an seiner dichtenden Position gehalten werden

Gemäß einer vorteilhaften Ausgestaltung des Filtersystems können die Rippe und/oder die Nut einen Hinterschnitt aufweisen. Auf diese Weise kann eine besonders sichere Fixierung des Filterelements in seiner Position erreicht werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: eine Explosionsdarstellung eines Filtersystems nach einem Ausführungsbeispiel der Erfindung;
- Fig. 2: einen vergrößerten Ausschnitt aus der Darstellung von Figur 1 mit Teilen einer Verbindungseinrichtung von Filterelement und Filtergehäuse;
- Fig. 3: einen Ausschnitt eines Querschnitts durch das Filtersystem gemäß Figur 1;
- Fig. 4: einen vergrößerten Ausschnitt aus der Darstellung von Figur 3 mit Teilen der Verbindungseinrichtung von Filterelement und Filtergehäuse;
- Fig. 5: eine isometrische Darstellung des Filterelements nach Figur 1;
- Fig. 6: einen vergrößerten Ausschnitt von Teilen einer Verbindungseinrichtung von Filterelement und Filtergehäuse nach einem weiteren Ausführungsbeispiel der Erfindung;
- Fig. 7: eine isometrische Darstellung eines Gehäuseunterteils zur Aufnahme eines Filterelements nach einem weiteren Ausführungsbeispiel der Erfindung;
- Fig. 8: eine isometrische Darstellung des zu dem Gehäuseunterteil nach Figur 7 korrespondierenden Filterelements;
- Fig. 9: einen vergrößerten Ausschnitt aus einem Querschnitt durch das Filterelement nach Figur 8 im Bereich der Dichtung;
- Fig. 10: einen vergrößerten Ausschnitt aus einem Querschnitt durch eine Dichtnut des Gehäuseunterteils zur Aufnahme der Dichtung nach Figur 9;
- Fig. 11: eine vergrößerte Draufsicht auf das Gehäuseunterteil im Bereich einer Ecke der Dichtnut;
- Fig. 12: einen vergrößerten Ausschnitt aus einem Querschnitt durch die Dichtnut des Gehäuseunterteils nach Figur 10 mit eingesetztem Filterelement;
- Fig. 13: einen Ausschnitt eines Querschnitts durch ein Filtersystem nach einem weiteren Ausführungsbeispiel der Erfindung;
- Fig. 14: einen vergrößerten Ausschnitt eines Querschnitts durch das Filterelement nach Figur 13 im Bereich der Dichtung;
- Fig. 15: einen vergrößerten Ausschnitt eines Querschnitts durch das Gehäuseunterteil nach Figur 13 im Bereich der Dichtnut;
- Fig. 16: eine vergrößerte Draufsicht auf das Gehäuseunterteil im Bereich einer Ecke der Dichtnut nach dem Ausführungsbeispiel gemäß Figur 15;
- Fig. 17: eine Draufsicht auf das Gehäuseunterteil nach dem Ausführungsbeispiel gemäß Figur 15;
- Fig. 18: einen vergrößerten Ausschnitt eines Querschnitts durch ein Gehäuseunterteil im Bereich der Dichtnut nach einem weiteren Ausführungsbeispiel der Erfindung; und
- Fig. 19: einen vergrößerten Ausschnitt eines Querschnitts durch ein Filterelement im Bereich der Dichtung nach dem Ausführungsbeispiel gemäß Figur 18.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

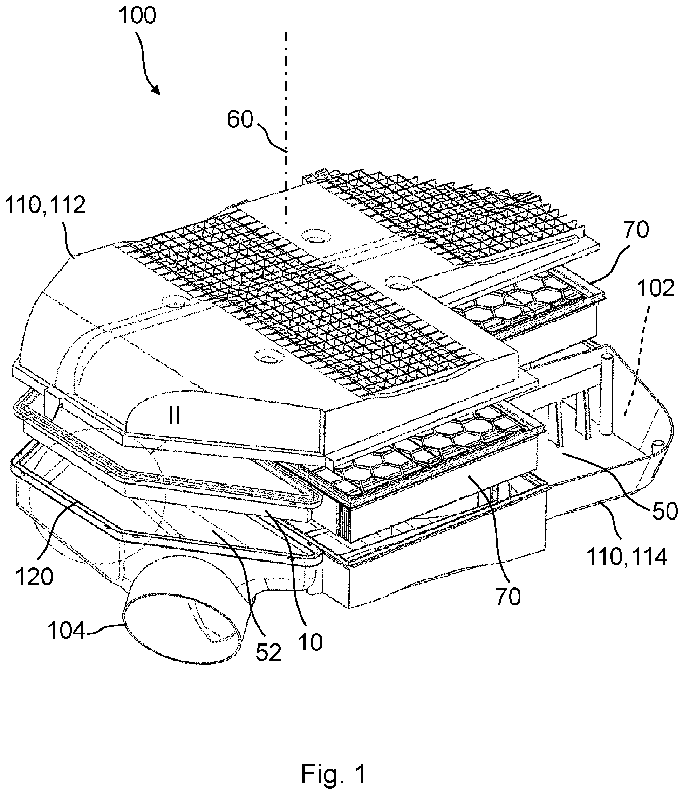

Figur 1 zeigt eine Explosionsdarstellung eines Filtersystems 100 nach einem Ausführungsbeispiel der Erfindung.

Das Filtersystem 100 weist ein Filtergehäuse 110 mit einem Gehäuseoberteil 112 und einem Gehäuseunterteil 114 auf. Das Gehäuseunterteil 114 weist einen Einlass 102 und einen Auslass 104 für das zu filternde Fluid auf.

In dem Filtergehäuse 110 sind zwei Hauptfilterelemente 70 angeordnet und strömungsmäßig nachgelagert ein Filterelement 10 als Sekundärelement oder Sicherheitselement. Die Hauptfilterelemente 70 sind zwischen der Rohseite 50 und der Reinseite 52 des Filtersystems 100 angeordnet. Das Filterelement 10 ist auf der Reinseite 52 angeordnet und verbleibt bei einem Wechsel der Hauptfilterelemente 70 an seiner Einbauposition. So ist der nachfolgende Fluidtrakt und beispielsweise ein Motor geschützt vor Verschmutzung beim Filterwechsel. Das Filterelement 10 kann ebenfalls getauscht werden.

Der zu filternde Fluidstrom tritt durch den Einlass 102 in das Filtergehäuse 110 ein. Die Hauptfilterelemente 70 werden in der Bildebene von unten nach oben durchströmt. Der Fluidstrom strömt an der Oberseite der Hauptfilterelemente 70 zum Sekundärelement 10. Das Sekundärelement 10 wird von oben nach unten durchströmt, bis der Fluidstrom durch den Auslass 104 wieder das Filtergehäuse 110 verlässt.

Das Filterelement 10 weist einen Filtermediumkörper 12 auf, welcher beispielsweise aus Cellulose und/oder einem Vlies-Medium gebildet ist. Das Filtermedium kann beispielsweise gefaltet sein.

Der Filtermediumkörper 12 weist eine auf einem äußeren Umfang 13 des Filtermediumkörpers 12 umlaufende Dichtung 14 zur axialen Abdichtung bei bestimmungsgemäßer Montage in einer axialen Richtung 60 in einem Filtergehäuse 110 eines Filtersystems 100 auf. Die Dichtung 14 weist einen Teil einer im Wesentlichen in axialer Richtung 60 formschlüssig sichernden Verbindungseinrichtung 20 auf, welche zu einem anderen Teil der Verbindungseinrichtung 20 an dem Filtergehäuse 110 korrespondierend ausgebildet ist.

Das Filtergehäuse 110 weist zur Aufnahme des Filterelements 10 eine umlaufende Dichtnut 120 auf, in welcher bei bestimmungsgemäßer Montage des Filterelements 10 die Dichtung 14 des Filterelements 10 aufgenommen ist.

Die Dichtnut 120 des Filtergehäuses 110 weist den anderen Teil der Verbindungseinrichtung 20 auf. Die Verbindungseinrichtung 20 ist insbesondere als Rastverbindung ausgebildet.

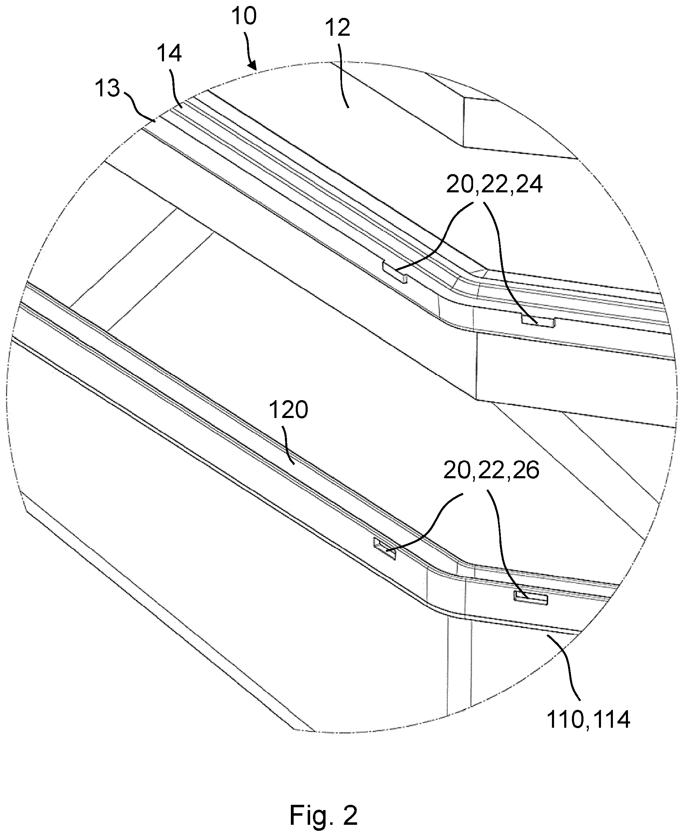

Figur 2 stellt dazu einen vergrößerten Ausschnitt aus der Darstellung von Figur 1 mit Teilen der Verbindungseinrichtung 20 von Filterelement 10 und Filtergehäuse 110 dar.

Der Teil der Verbindungseinrichtung 20 an der Dichtung 14 des Filterelements 10 ist als Teil der Rastverbindung ausgebildet. An der Dichtung 14 sind dazu eine Mehrzahl von schräg, insbesondere senkrecht, zu der axialen Richtung 60 ragende Rastelemente 22 angeordnet. In dem dargestellten Ausführungsbeispiel sind die Rastelemente 22 als schräg, insbesondere senkrecht, zu der axialen Richtung 60 hervorstehende Noppen 24 ausgebildet.

Der Teil der Verbindungseinrichtung 20 an dem Filtergehäuse 110 weist eine Mehrzahl von schräg, insbesondere senkrecht, zu der axialen Richtung 60 ragende Rastelemente 22 auf, welche zur Wirkverbindung mit dem anderen Teil der Verbindungseinrichtung 20 an dem Filterelement 10 ausgebildet sind. Diese Rastelemente 22 sind bei dem dargestellten Ausführungsbeispiel als sich schräg, insbesondere senkrecht, zu der axialen Richtung 60 erstreckende Vertiefungen 26 ausgebildet.

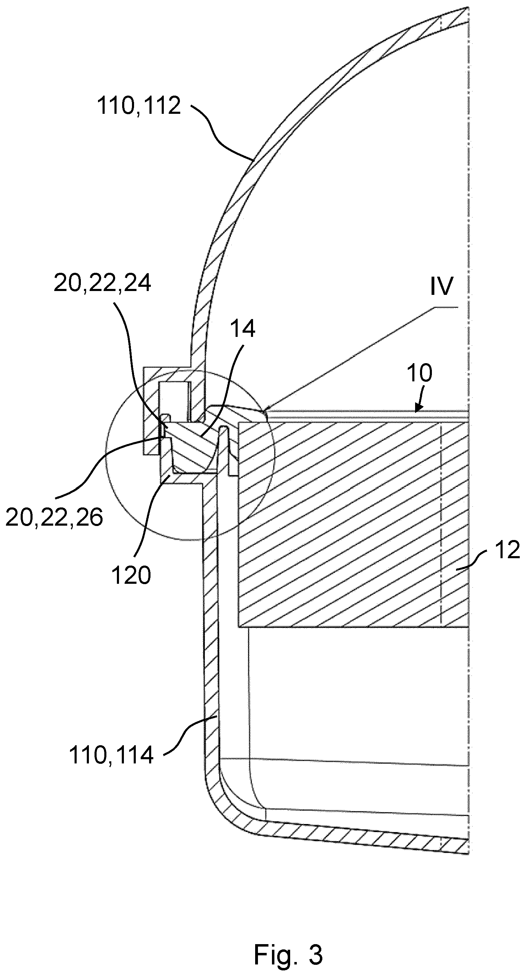

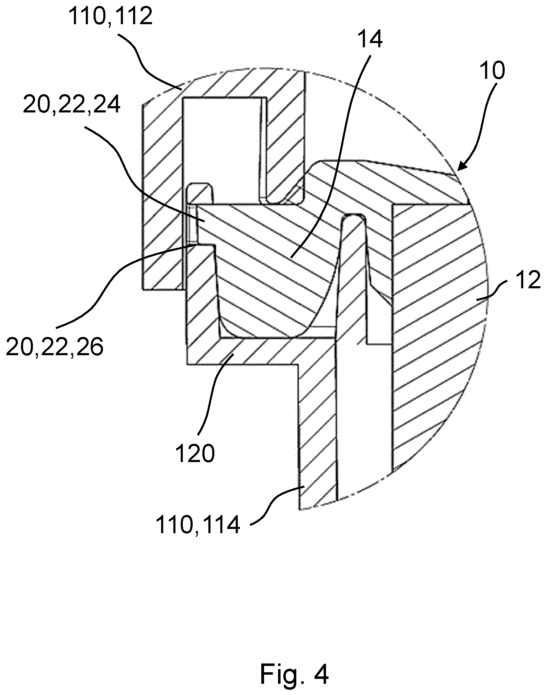

Figur 3 zeigt einen Ausschnitt eines Querschnitts durch das Filtersystem 100 gemäß Figur 1. In Figur 4 ist ein vergrößerter Ausschnitt aus der Darstellung von Figur 3 mit Teilen der Verbindungseinrichtung 20 von Filterelement 10 und Filtergehäuse 110 erkennbar.

Insbesondere ist im Querschnitt zu erkennen, wie die Noppen 24 der Dichtung 14 in die Vertiefungen 26 oder Ausschnitte der Dichtnut 120 des Gehäuseunterteils 114 eingreifen. Beim Einsetzen des Filterelements 10 in das Gehäuseunterteil 114 schnappen die Noppen 24 in die Vertiefungen 26 der Dichtnut 120 ein und verrasten auf diese Weise das Filterelement 10 im Gehäuseunterteil 114. Auf diese Weise ist das Filterelement 10 gegen eine ungewollte Entnahme aus dem Gehäuseunterteil 114 gesichert, was insbesondere bei geöffnetem Gehäuse während des Austauschs zumindest eines der Hauptfilterelemente 70 wichtig ist.

Die Dichtung 14 umgreift eine Kante des Filtermediumkörpers 12, da die Dichtung 14, beispielsweise aus Polyurethan (PUR) gebildet, an den Filtermediumkörper 12 angeschäumt ist. Die Dichtung 14 ist in ihrem Querschnitt in der Dichtnut 120 aufgenommen. Bei geschlossenem Filtergehäuse 110 liegt eine Dichtkante des Gehäuseoberteils 112 auf der Dichtung 14 auf, verpresst die Dichtung 14 in der Dichtnut 120 und bewirkt so eine axiale Abdichtung des Filterelements 10 in axialer Richtung 60 gegen den Auslass 104 des Filtergehäuses 110.

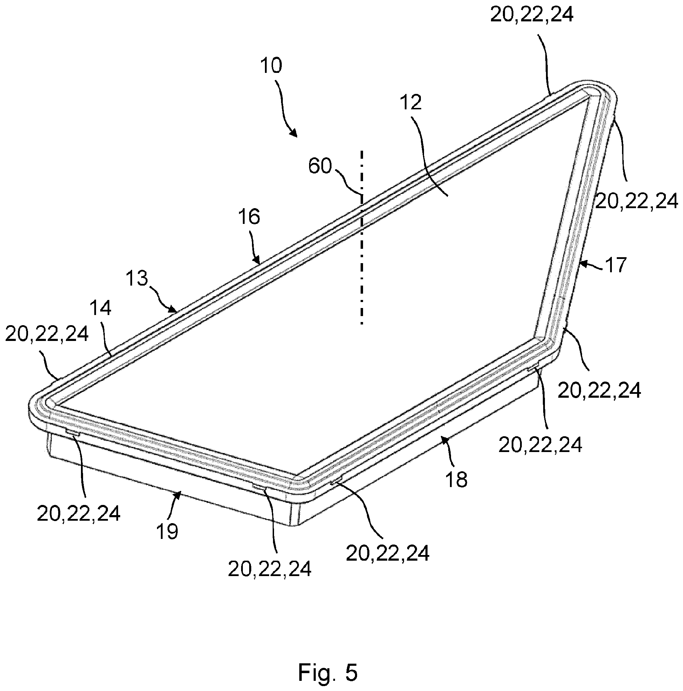

Figur 5 zeigt eine isometrische Darstellung des Filterelements 10. Der Teil der Verbindungseinrichtung 20 an der Dichtung 14 liegt günstigerweise an wenigstens zwei einander gegenüberliegenden Seiten 16, 18; 17, 19 des Filtermediumkörpers 12 vor. Bei dem in Figur 5 dargestellten Ausführungsbeispiel sind an allen Längsseiten 16, 18; 17, 19 des Filtermediumkörpers 12 Rastelemente 22 angeordnet, um ein sicheres Verrasten des Filterelements 10 in der Dichtnut 120 des Gehäuseunterteils 114 zu erreichen.

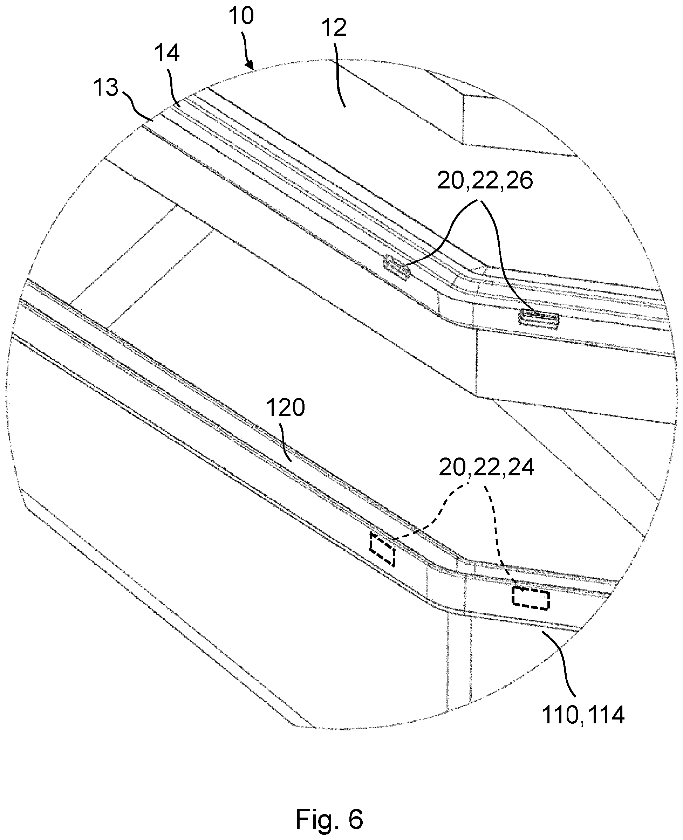

Figur 6 zeigt einen vergrößerten Ausschnitt von Teilen einer Verbindungseinrichtung 20 von Filterelement 10 und Filtergehäuse 110 nach einem weiteren Ausführungsbeispiel der Erfindung.

Bei diesem Ausführungsbeispiel sind Noppen 24 als Rastelemente 22 der Verbindungseinrichtung 20 in der Dichtnut 120 angeordnet, während die Dichtung 14 Vertiefungen 26 als korrespondierende Rastelemente 22 aufweist. Auch auf diese Weise kann eine sichere Verrastung des Filterelements 10 in der Dichtnut 120 des Gehäuseunterteils 114 erreicht werden.

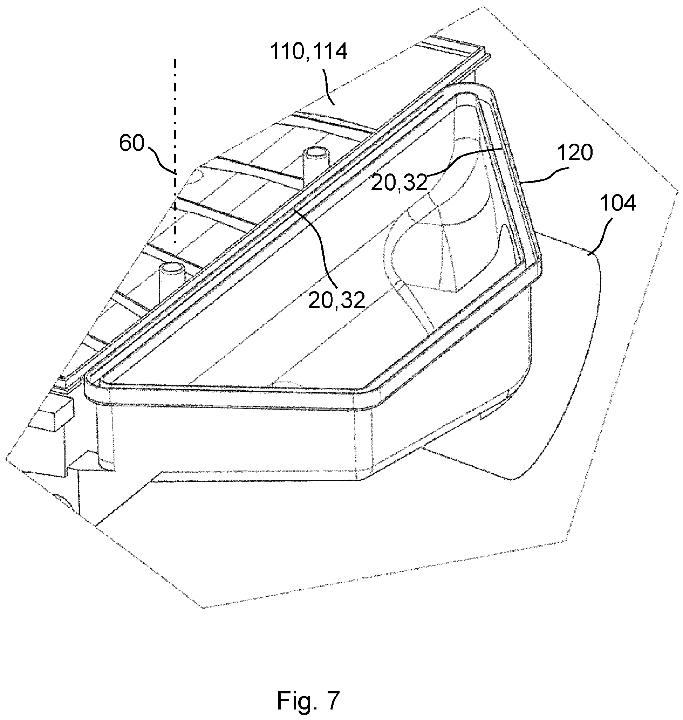

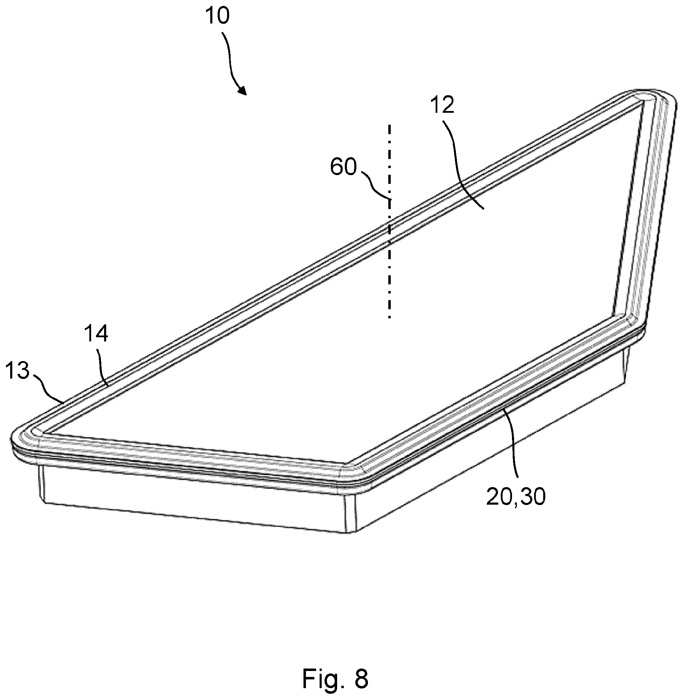

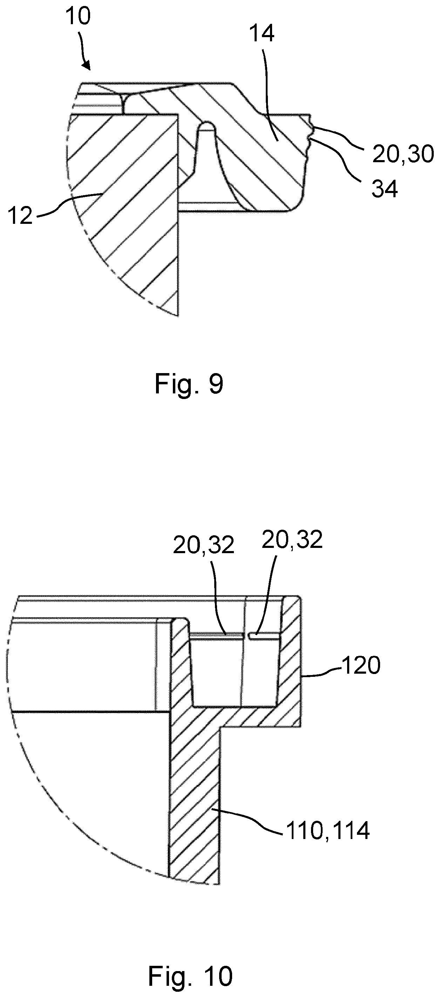

Figur 7 zeigt eine isometrische Darstellung des Gehäuseunterteils 114 zur Aufnahme des Filterelements 10 nach einem weiteren Ausführungsbeispiel der Erfindung, während in Figur 8 eine isometrische Darstellung des dazu korrespondierenden Filterelements 10 dargestellt ist. Figur 9 zeigt dazu einen vergrößerten Ausschnitt aus einem Querschnitt durch das Filterelement 10 nach Figur 8 im Bereich der Dichtung 14, und Figur 10 einen vergrößerten Ausschnitt aus einem Querschnitt durch die Dichtnut 120 des Gehäuseunterteils 114 zur Aufnahme der Dichtung 14 nach Figur 9.

Bei diesem Ausführungsbeispiel weist der Teil der Verbindungseinrichtung 20 an der Dichtung 14 eine schräg, insbesondere senkrecht, zu der axialen Richtung 60 verlaufende Erhebung 30 mit einem Hinterschnitt 34 auf, welcher zur Wirkverbindung mit dem anderen Teil der Verbindungseinrichtung 20 an dem Filtergehäuse 110 ausgebildet ist. Der Teil der Verbindungseinrichtung 20 an dem Filtergehäuse 110 weist dazu eine schräg, insbesondere senkrecht, zu der axialen Richtung 60 verlaufende Rippe 32 auf. Beim Einsetzen des Filterelements 10 in das Gehäuseunterteil 114 schnappt die Rippe 32 über die Erhebung 30 der Dichtung 14 in den Hinterschnitt 34, so dass die Dichtung 14 mit der Rippe 32 verrastet. Dadurch ist das Filterelement 10 mit der Dichtung 14 in der Dichtnut 120 des Gehäuseunterteils 114 verrastet und kann nicht ungewollt aus dem Dichtsitz herausgleiten.

Es genügt, wenn die Erhebung 30 der Dichtung 14 wenigstens bereichsweise auf dem äußeren Umfang 13 umlaufend ausgebildet ist, genauso wie die Rippe 32 an der Dichtnut 120 des Gehäuseunterteils 114 nur wenigstens bereichsweise umlaufend ausgebildet sein kann, um eine ausreichende Fixierung des Filterelements 10 in dem Gehäuseunterteil 114 zu erreichen.

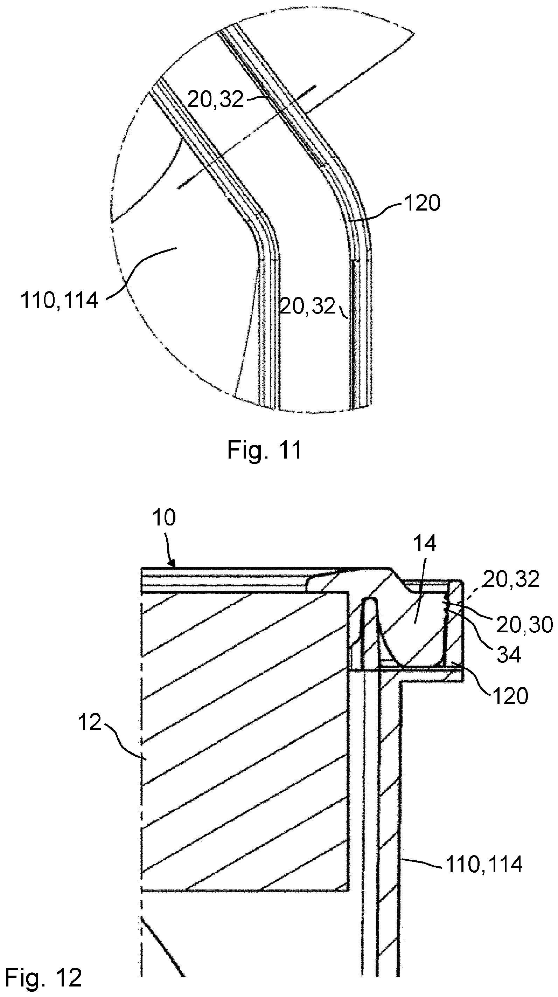

Figur 11 zeigt eine vergrößerte Draufsicht auf das Gehäuseunterteil 114 im Bereich einer Ecke der Dichtnut 120, wo erkennbar ist, dass die Rippe 32 im Bereich der Ecke der Dichtnut 120 ausgespart ist. Auf diese Weise kann die Herstellung des Gehäuseunterteils 114 auf Grund der nötigen Entformung beim Spritzgießen erleichtert werden.

In Figur 12 ist ein vergrößerter Ausschnitt aus einem Querschnitt durch die Dichtnut 120 des Gehäuseunterteils 114 nach Figur 10 mit eingesetztem Filterelement 10 dargestellt. Die Rippe 32 der Dichtnut 120 ist in den Hinterschnitt 34 der Erhebung 30 der Dichtung 14 eingedrungen und deshalb nicht mehr erkennbar. So ist die Dichtung 14 in der Dichtnut 120 verrastet und damit das Filterelement 10 sicher fixiert in dem Gehäuseunterteil 114.

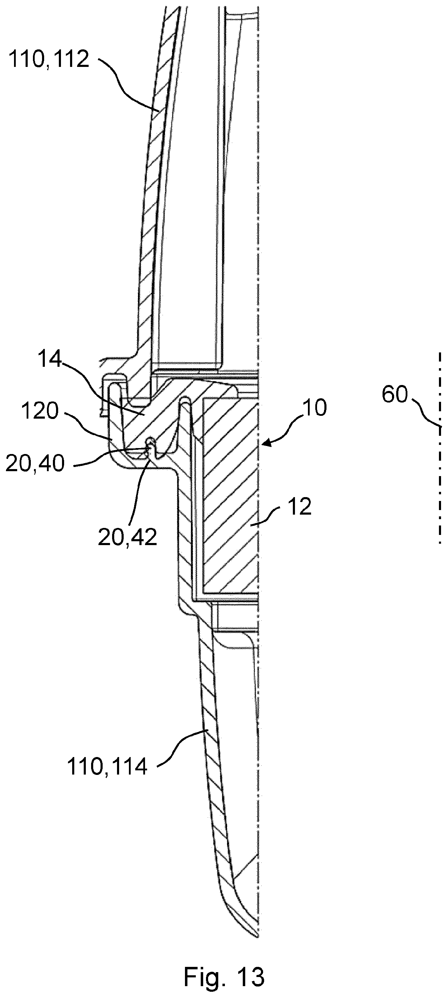

Figur 13 zeigt einen Ausschnitt eines Querschnitts durch ein Filtersystem 100 nach einem weiteren Ausführungsbeispiel der Erfindung.

Bei diesem Ausführungsbeispiel weist der Teil der Verbindungseinrichtung 20 an der Dichtung 14 eine wenigstens bereichsweise umlaufende, in axialer Richtung 60 vertiefte Nut 40 auf, welche zur Wirkverbindung mit dem anderen Teil der Verbindungseinrichtung 20 an dem Filtergehäuse 110 ausgebildet ist. Der Teil der Verbindungseinrichtung 20 an dem Filtergehäuse 110 weist dazu eine wenigstens bereichsweise umlaufende, in axialer Richtung 60 hervorstehende Rippe 44 auf. Beim Einsetzen des Filterelements 10 mit seiner Dichtung 14 in die Dichtnut 120 greift die Rippe 44 der Dichtnut 120 in die Nut 40 der Dichtung 14 ein, wodurch die Dichtung 14 in der Dichtnut 120 verrastet wird.

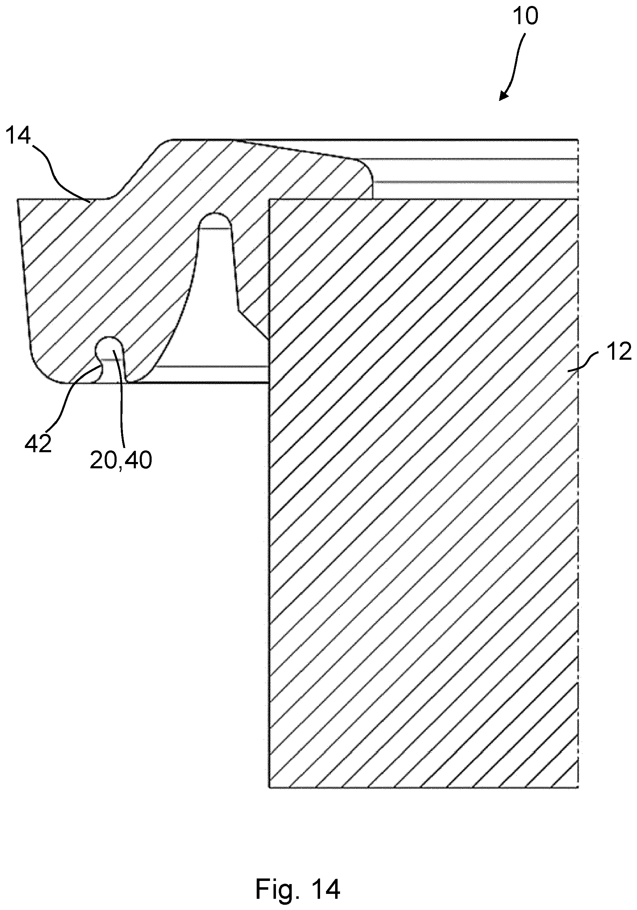

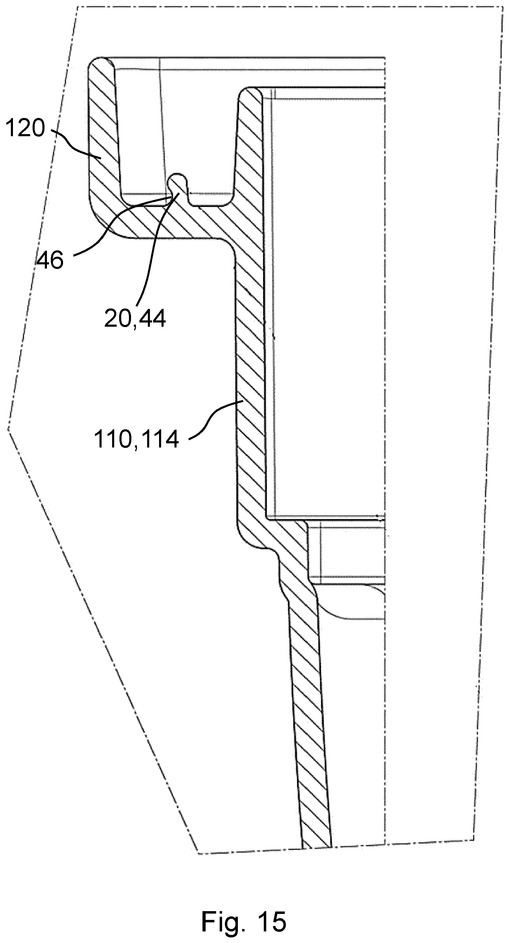

Figur 14 zeigt einen vergrößerten Ausschnitt eines Querschnitts durch das Filterelement 10 nach Figur 13 im Bereich der Dichtung 14, während in Figur 15 ein vergrößerter Ausschnitt eines Querschnitts durch das Gehäuseunterteil 114 nach Figur 13 im Bereich der Dichtnut 120 dargestellt ist.

In den Figuren ist zu erkennen, dass die Nut 40 einen Hinterschnitt 42 aufweist und die Rippe 44 ebenfalls einen Hinterschnitt 42, 46 aufweist. Durch die beiden Hinterschnitte 42, 44 kann die Rippe 44 beim Zusammenführen von Rippe 44 und Nut 40 in der Nut 40 verrasten, so dass die Dichtung 14 und damit das Filterelement 10 in der Dichtnut 120 fixiert ist.

Auch hier genügt es, wenn die Rippe 44 in der Dichtnut 120 nur bereichsweise umlaufend ausgebildet ist, um die Dichtung 14 des Filterelements 10 zu fixieren.

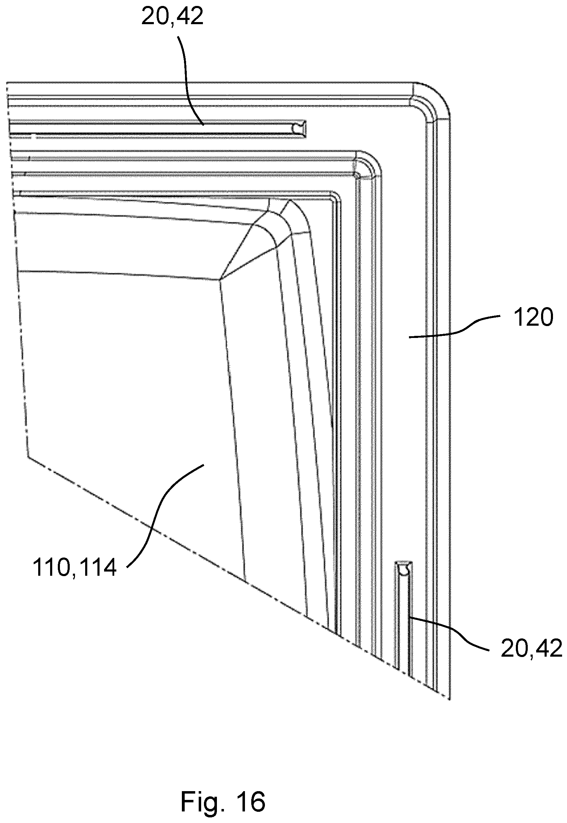

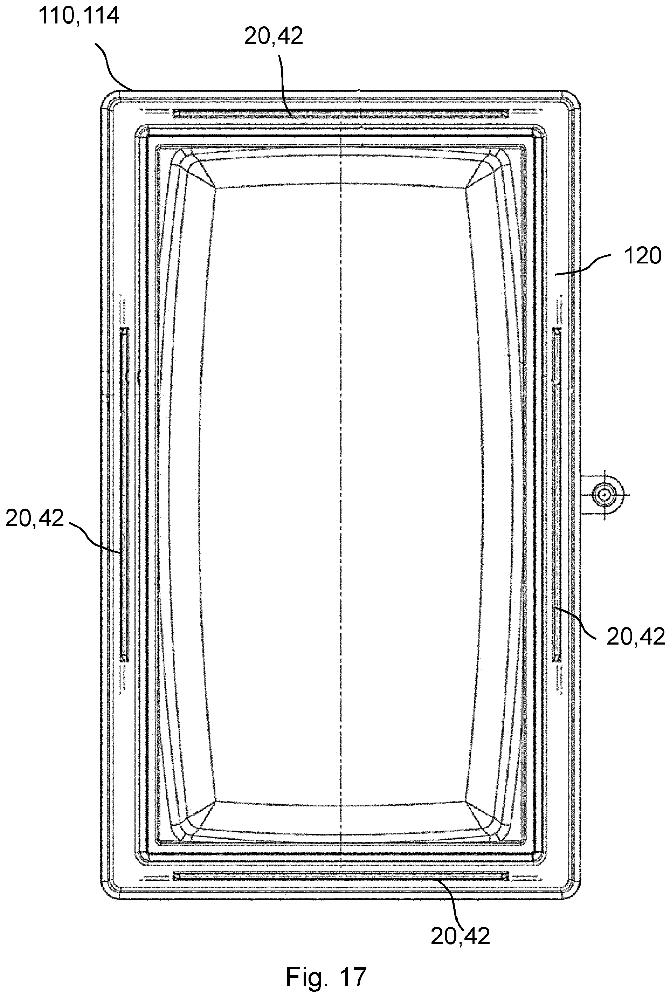

Figur 16 zeigt dazu eine vergrößerte Draufsicht auf das Gehäuseunterteil 114 im Bereich einer Ecke der Dichtnut 120 nach dem Ausführungsbeispiel gemäß Figur 15, während Figur 17 eine Draufsicht auf das Gehäuseunterteil 114 mit der Aufnahme für das gesamte Filterelement 10 zeigt. Das Filterelement 10 ist in diesem Ausführungsbeispiel im Gegensatz zu den vorigen Ausführungsbeispielen rechteckförmig ausgebildet. In den beiden Figuren ist erkennbar, dass insbesondere die Ecken der Dichtnut 120 von der Rippe 44 ausgespart sind. Auf diese Weise kann die Herstellung des Gehäuseunterteils 114 auf Grund der nötigen Entformung beim Spritzgießen erleichtert werden.

In einer alternativen Ausführungsform kann der Teil der Verbindungseinrichtung 20 an der Dichtung 14 eine wenigstens bereichsweise umlaufende, in axialer Richtung 60 von der Dichtung 14 weg ragende Rippe 44 aufweisen, während der Teil der Verbindungseinrichtung 20 an dem Filtergehäuse 110 eine wenigstens bereichsweise umlaufende, in axialer Richtung 60 vertiefte Nut 40 aufweist. Dabei kann beim Einsetzen des Filterelements 10 mit der Dichtung 14 in die Dichtnut 120 die Rippe 44 der Dichtung 14 in die Nut 40 der Dichtnut 120 eingreifen und die Dichtung 14 auf diese Weise in der Dichtnut 120 verrasten. So kann das Filterelement 10 in dem Gehäuseunterteil 114 fixiert werden. Insbesondere können auch dabei Ecken der Dichtnut 120 frei von der Verbindungseinrichtung 20 bleiben, wodurch die Herstellung des Gehäuseunterteils 114 auf Grund der nötigen Entformung beim Spritzgießen erleichtert wird.

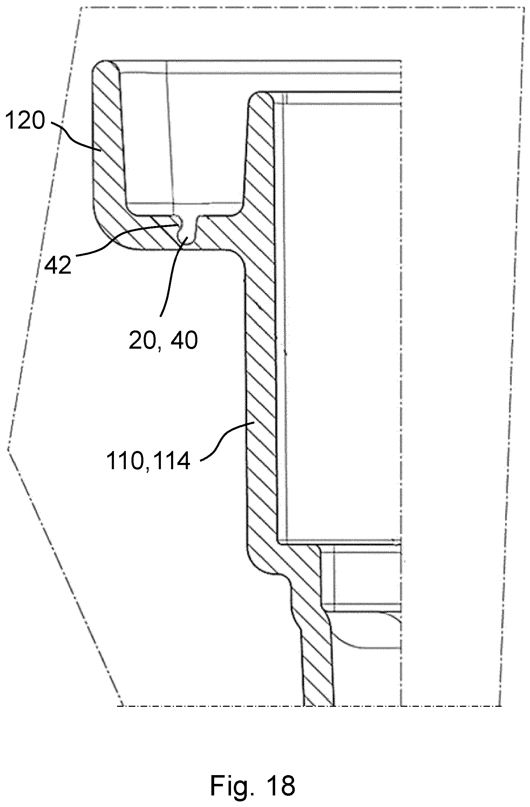

Figur 18 zeigt dazu einen vergrößerten Ausschnitt eines Querschnitts durch ein Gehäuseunterteil 114 im Bereich der Dichtnut 120, in welchem die Nut 40 in der Dichtnut 120 erkennbar ist.

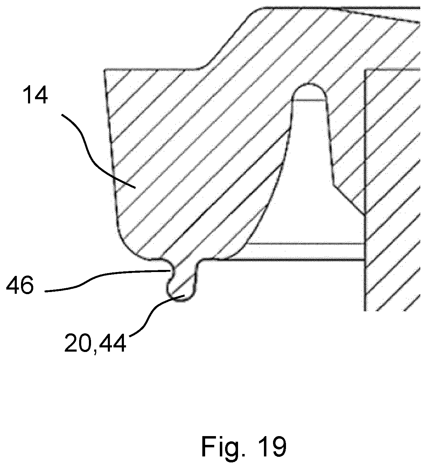

In Figur 19 ist ein vergrößerter Ausschnitt eines Querschnitts durch das Filterelement 10 im Bereich der Dichtung 14 dargestellt, welche die zu der Nut 40 korrespondierende Rippe 44 in der Dichtung 14 erkennen lässt.

### Bezugszeichen

- 10: Filterelement
- 12: Filtermediumkörper
- 14: Dichtung
- 16: Seite
- 17: Seite
- 18: Seite
- 19: Seite
- 20: Verbindungseinrichtung
- 22: Rastelement
- 24: Noppen
- 26: Vertiefung
- 30: Erhebung
- 32: Rippe
- 34: Hinterschnitt
- 40: Nut
- 42: Hinterschnitt
- 44: Rippe
- 46: Hinterschnitt
- 50: Rohseite
- 52: Reinseite
- 60: axiale Richtung
- 70: Hauptelement
- 100: Filtersystem
- 102: Einlass
- 104: Auslass
- 110: Filtergehäuse
- 112: Gehäuseoberteil
- 114: Gehäuseunterteil
- 120: Dichtnut

## Patentansprüche

1. Filterelement (10), insbesondere Sekundärelement, zum Filtern eines Fluids mit wenigstens einem Filtermediumkörper (12), welcher eine auf einem äußeren Umfang (13) des Filtermediumkörpers (12) umlaufende Dichtung (14) zur axialen Abdichtung bei bestimmungsgemäßer Montage in einer axialen Richtung (60) in einem Filtergehäuse (110) eines Filtersystems (100) aufweist,
wobei die Dichtung (14) einen Teil einer in axialer Richtung (60) formschlüssig sichernden Verbindungseinrichtung (20) aufweist, welche zu einem anderen Teil der Verbindungseinrichtung (20) an dem Filtergehäuse (110) korrespondierend ausgebildet ist, wobei an der Dichtung (14) eine Mehrzahl von schräg zu der axialen Richtung (60) ragenden Rastelementen (22) angeordnet ist.

2. Filterelement nach Anspruch 1, wobei der Teil der Verbindungseinrichtung (20) an der Dichtung (14) als Teil einer Rastverbindung ausgebildet ist.

3. Filterelement nach Anspruch 1 oder 2, wobei der Teil der Verbindungseinrichtung (20) an der Dichtung (14) einteilig mit der Dichtung (14) ausgebildet ist, insbesondere materialeinstückig mit der Dichtung (14), insbesondere mit der Dichtung (14) zusammen in einem Urformverfahren, insbesondere Gießen bzw. Spritzgießen, erzeugt wird.

4. Filterelement nach einem der Ansprüche 1 bis 3, wobei der Teil der Verbindungseinrichtung (20) an der Dichtung (14) dazu eingerichtet ist, in einem Wirkkontakt mit dem Teil der Verbindungseinrichtung (20) an dem Filtergehäuse (110) unmittelbar Haltekräfte in axialer Richtung (60) zu übertragen.

5. Filterelement nach einem der Ansprüche 1 bis 4, wobei an der Dichtung (14) eine Mehrzahl von senkrecht zu der axialen Richtung (60) ragenden Rastelementen (22) angeordnet ist, insbesondere wobei die Rastelemente (22) als schräg, insbesondere senkrecht, zu der axialen Richtung (60) hervorstehende Noppen (24) oder als sich schräg, insbesondere senkrecht, zu der axialen Richtung (60) erstreckende Vertiefungen (26) ausgebildet sind.

6. Filterelement nach einem der vorhergehenden Ansprüche, wobei der Teil der Verbindungseinrichtung (20) an der Dichtung (14) an wenigsten zwei einander gegenüberliegenden Seiten (16, 18; 17, 19) des Filtermediumkörpers (12) vorliegt, insbesondere wobei bevorzugt an wenigsten zwei einander gegenüberliegenden Seiten (16, 18; 17, 19) des Filtermediumkörpers (12) wenigstens zwei Rastelemente (22) angeordnet sind.

7. Filterelement nach Anspruch 1, wobei der Teil der Verbindungseinrichtung (20) an der Dichtung (14) eine schräg, insbesondere senkrecht, zu der axialen Richtung (60) verlaufende Erhebung (30) mit einem Hinterschnitt (34) aufweist, welcher zur Wirkverbindung mit dem anderen Teil der Verbindungseinrichtung (20) an dem Filtergehäuse (110) ausgebildet ist, wobei insbesondere der andere Teil der Verbindungseinrichtung (20) an dem Filtergehäuse (110) eine schräg, insbesondere senkrecht, zu der axialen Richtung (60) hervorstehende Rippe (32) aufweist, die jenseits der Erhebung (30) in dem Hinterschnitt (34) aufnehmbar ist, wobei optional die Erhebung (30) wenigstens bereichsweise auf dem äußeren Umfang (13) der Dichtung (14) umlaufend ausgebildet ist.

8. Filterelement nach Anspruch 1, wobei der Teil der Verbindungseinrichtung (20) an der Dichtung (14) eine wenigstens bereichsweise umlaufende, in axialer Richtung (60) vertiefte Nut (40) aufweist, welche zur Wirkverbindung mit dem anderen Teil der Verbindungseinrichtung (20) an dem Filtergehäuse (110) ausgebildet ist, oder
wobei der Teil der Verbindungseinrichtung (20) an der Dichtung (14) eine wenigstens bereichsweise umlaufende, in axialer Richtung (60) von der Dichtung (14) weg ragende Rippe (44) aufweist, wobei optional die Nut (40) und/oder die Rippe (44) einen Hinterschnitt (42, 46) aufweisen.

9. Filtersystem (100) zum Filtern eines Fluids mit einem Filtergehäuse (110) und wenigstens einem in dem Filtergehäuse (110) austauschbar angeordneten Filterelement (10), insbesondere Sekundärelement, zum Filtern eines Fluids, nach einem der vorhergehenden Ansprüche, mit wenigstens einem Filtermediumkörper (12),
wobei das Filtergehäuse (110) eine umlaufende Dichtnut (120) aufweist, in welcher bei bestimmungsgemäßer Montage des Filterelements (10) eine Dichtung (14) des Filterelements (10) aufgenommen ist,
wobei die Dichtnut (120) des Filtergehäuses (110) wenigstens einen Teil einer in axialer Richtung (60) formschlüssig sichernden Verbindungseinrichtung (20) aufweist, die zu einem anderen Teil der Verbindungseinrichtung (20) an dem wenigstens einen Filterelement (10) korrespondierend ausgebildet ist, insbesondere wobei die Verbindungseinrichtung (20) als Rastverbindung ausgebildet ist.

10. Filtersystem nach Anspruch 9, wobei der Teil der Verbindungseinrichtung (20) an dem Filtergehäuse (110) eine Mehrzahl von schräg, insbesondere senkrecht, zu der axialen Richtung (60) ragenden Rastelementen (22) aufweist, welche zur Wirkverbindung mit dem anderen Teil der Verbindungseinrichtung (20) an dem Filterelement (10) ausgebildet sind.

11. Filtersystem nach Anspruch 10, wobei die Rastelemente (22) als schräg, insbesondere senkrecht, zu der axialen Richtung (60) hervorstehende Vertiefungen (26) oder Noppen (24) ausgebildet sind.

12. Filtersystem nach Anspruch 9, wobei der Teil der Verbindungseinrichtung (20) an dem Filtergehäuse (110) eine schräg, insbesondere senkrecht, zu der axialen Richtung (60) verlaufende Rippe (32) aufweist, welche zur Wirkverbindung mit dem anderen Teil der Verbindungseinrichtung (20) an dem Filterelement (10) ausgebildet ist, oder
wobei der Teil der Verbindungseinrichtung (20) eine schräg, insbesondere senkrecht, zu der axialen Richtung (60) verlaufende Erhebung (30) mit Hinterschnitt (34) aufweist.

13. Filtersystem nach Anspruch 12, wobei die Rippe (32) oder die Erhebung (30) wenigstens bereichsweise umlaufend ausgebildet sind.

14. Filtersystem nach Anspruch 9, wobei der Teil der Verbindungseinrichtung (20) an dem Filtergehäuse (110) eine wenigstens bereichsweise umlaufende, in axialer Richtung (60) hervorstehende Rippe (44) aufweist, welche zur Wirkverbindung mit dem anderen Teil der Verbindungseinrichtung (20) an dem Filterelement (10) ausgebildet ist, oder
wobei der Teil der Verbindungseinrichtung (20) an dem Filtergehäuse (110) eine wenigstens bereichsweise umlaufende, in axialer Richtung (60) vertiefte Nut (40) aufweist, insbesondere wobei Ecken der Dichtnut (120) frei von der Verbindungseinrichtung (20) sind.

15. Filtersystem nach Anspruch 14, wobei die Rippe (44) oder die Nut (40) einen Hinterschnitt (42, 46) aufweisen.

## Claims

1. Filter element (10), in particular a secondary element, for filtering a fluid, the filter element comprising at least one filter medium body (12) which has a circumferential seal (14) on an outer circumference (13) of the filter medium body (12) for axial sealing when installed as intended in an axial direction (60) in a filter housing (110) of a filter system (100),
wherein the seal (14) has a part of a connecting device (20) which form-fittingly secures in an axial direction (60) and is designed to correspond to another part of the connecting device (20) on the filter housing (110), wherein a plurality of locking elements (22) protruding obliquely to the axial direction (60) are arranged on the seal (14).

2. Filter element according to claim 1, wherein the part of the connecting device (20) on the seal (14) is designed as part of a locking connection.

3. Filter element according to claim 1 or 2, wherein the part of the connecting device (20) on the seal (14) is formed integrally with the seal (14), in particular is produced as a single piece of material with the seal (14), in particular is produced together with the seal (14) in a primary forming process, in particular molding or injection molding.

4. Filter element according to any of claims 1 to 3, wherein the part of the connecting device (20) on the seal (14) is designed, when in operative contact with the part of the connecting device (20), to transmit holding forces in the axial direction (60) directly to the filter housing (110).

5. Filter element according to any of claims 1 to 4, wherein a plurality of locking elements (22) protruding perpendicularly to the axial direction (60) are arranged on the seal (14), in particular wherein the locking elements (22) are designed as knobs (24) protruding obliquely, in particular perpendicularly, to the axial direction (60) or as recesses (26) extending obliquely, in particular perpendicularly, to the axial direction (60).

6. Filter element according to any of the preceding claims, wherein the part of the connecting device (20) on the seal (14) is located on at least two opposite sides (16, 18; 17, 19) of the filter medium body (12), in particular wherein at least two locking elements (22) are preferably arranged on at least two opposite sides (16, 18; 17, 19) of the filter medium body (12).

7. Filter element according to claim 1, wherein the part of the connecting device (20) on the seal (14) has a projection (30) which extends obliquely, in particular perpendicularly, to the axial direction (60) and has an undercut (34) which is designed for operative connection to the other part of the connecting device (20) on the filter housing (110), wherein in particular the other part of the connecting device (20) on the filter housing (110) has a rib (32) which protrudes obliquely, in particular perpendicularly, to the axial direction (60) and can be received in the undercut (34) beyond the projection (30), wherein optionally the projection (30) is formed at least partially circumferentially on the outer circumference (13) of the seal (14).

8. Filter element according to claim 1, wherein the part of the connecting device (20) on the seal (14) has a groove (40) which is at least partially circumferential and recessed in the axial direction (60) and is designed for operative connection to the other part of the connecting device (20) on the filter housing (110), or
wherein the part of the connecting device (20) on the seal (14) has a rib (44) which is at least partially circumferential and protrudes away from the seal (14) in the axial direction (60), wherein optionally the groove (40) and/or the rib (44) have an undercut (42, 46).

9. Filter system (100) for filtering a fluid, comprising a filter housing (110) and at least one filter element (10), in particular a secondary element, which is arranged exchangeably in the filter housing (110), for filtering a fluid, according to any of the preceding claims, and has at least one filter medium body (12),
wherein the filter housing (110) has a circumferential sealing groove (120) in which, when the filter element (10) is installed as intended, a seal (14) of the filter element (10) is received,
wherein the sealing groove (120) of the filter housing (110) comprises at least a part of a connecting device (20) which form-fittingly secures in an axial direction (60) manner and is designed to correspond to another part of the connecting device (20) on the at least one filter element (10), in particular wherein the connecting device (20) is designed as a locking connection.

10. Filter system according to claim 9, wherein the part of the connecting device (20) on the filter housing (110) comprises a plurality of locking elements (22) which protrude obliquely, in particular perpendicularly, to the axial direction (60) and are designed for operative connection to the other part of the connecting device (20) on the filter element (10).

11. Filter system according to claim 10, wherein the locking elements (22) are designed as recesses (26) or knobs (24) protruding obliquely, in particular perpendicularly, to the axial direction (60).

12. Filter system according to claim 9, wherein the part of the connecting device (20) on the filter housing (110) has a rib (32) which extends obliquely, in particular perpendicularly, to the axial direction (60) and is designed for operative connection to the other part of the connecting device (20) on the filter element (10), or
wherein the part of the connecting device (20) has a projection (30) which extends obliquely, in particular perpendicularly, to the axial direction (60) and has an undercut (34).

13. Filter system according to claim 12, wherein the rib (32) or the projection (30) is formed at least partially circumferentially.

14. Filter system according to claim 9, wherein the part of the connecting device (20) on the filter housing (110) has a rib (44) which is at least partially circumferential and protrudes in the axial direction (60) and is designed for operative connection to the other part of the connecting device (20) on the filter element (10), or
wherein the part of the connecting device (20) on the filter housing (110) has a groove (40) which is at least partially circumferential and recessed in the axial direction (60), in particular wherein corners of the sealing groove (120) are free from the connecting device (20).

15. Filter system according to claim 14, wherein the rib (44) or the groove (40) has an undercut (42, 46).

## Revendications

1. Élément filtrant (10), en particulier élément secondaire, permettant de filtrer un fluide, comportant au moins un corps de milieu filtrant (12) qui présente un joint (14) s'étendant de manière circonférentielle sur une périphérie extérieure (13) du corps de milieu filtrant (12) pour assurer l'étanchéité axiale lors d'un montage conforme à l'utilisation dans une direction axiale (60) dans un boîtier de filtre (110) d'un système de filtration (100),
dans lequel le joint (14) présente une partie d'un dispositif de liaison (20) assurant un verrouillage par complémentarité de forme dans la direction axiale (60), laquelle partie est réalisée de manière à correspondre à une autre partie du dispositif de liaison (20) au niveau du boîtier de filtre (110), dans lequel une pluralité d'éléments d'encliquetage (22) faisant saillie obliquement à la direction axiale (60) sont disposés sur le joint (14).

2. Élément filtrant selon la revendication 1, dans lequel la partie du dispositif de liaison (20) au niveau du joint (14) est réalisée en tant que partie d'une liaison à encliquetage.

3. Élément filtrant selon la revendication 1 ou 2, dans lequel la partie du dispositif de liaison (20) au niveau du joint (14) est réalisée d'un seul tenant avec le joint (14), en particulier d'un seul tenant dans le même matériau que le joint (14), et est en particulier fabriquée conjointement avec le joint (14) selon un procédé de formage primaire, en particulier par moulage ou moulage par injection.

4. Élément filtrant selon l'une des revendications 1 à 3, dans lequel la partie du dispositif de liaison (20) au niveau du joint (14) est conçue pour transmettre des forces de retenue directement dans la direction axiale (60) lors d'un contact fonctionnel avec la partie du dispositif de liaison (20) au niveau du boîtier de filtre (110).

5. Élément filtrant selon l'une des revendications 1 à 4, dans lequel une pluralité d'éléments d'encliquetage (22) faisant saillie perpendiculairement à la direction axiale (60) sont disposés sur le joint (14), en particulier dans lequel les éléments d'encliquetage (22) sont réalisés en tant que picots (24) faisant saillie obliquement, en particulier perpendiculairement, à la direction axiale (60), ou en tant que renfoncements (26) s'étendant obliquement, en particulier perpendiculairement, à la direction axiale (60).

6. Élément filtrant selon l'une des revendications précédentes, dans lequel la partie du dispositif de liaison (20) au niveau du joint (14) est présente sur au moins deux côtés (16, 18 ; 17, 19) opposés l'un à l'autre du corps de milieu filtrant (12), en particulier dans lequel, de préférence, au moins deux éléments d'encliquetage (22) sont disposés sur au moins deux côtés (16, 18 ; 17, 19) opposés l'un à l'autre du corps de milieu filtrant (12).

7. Élément filtrant selon la revendication 1, dans lequel la partie du dispositif de liaison (20) au niveau du joint (14) présente une saillie (30) s'étendant obliquement, en particulier perpendiculairement, à la direction axiale (60) et comportant une contre-dépouille (34) qui est réalisée pour la liaison fonctionnelle avec l'autre partie du dispositif de liaison (20) au niveau du boîtier de filtre (110), dans lequel, en particulier, l'autre partie du dispositif de liaison (20) au niveau du boîtier de filtre (110) présente une nervure (32) faisant saillie obliquement, en particulier perpendiculairement, à la direction axiale (60), laquelle nervure peut être reçue au-delà de la saillie (30) dans la contre-dépouille (34), dans lequel, éventuellement, la saillie (30) est réalisée de manière à s'étendre de manière circonférentielle, au moins dans certaines régions, sur la périphérie extérieure (13) du joint (14).

8. Élément filtrant selon la revendication 1, dans lequel la partie du dispositif de liaison (20) au niveau du joint (14) présente une rainure (40) s'étendant de manière circonférentielle, au moins dans certaines régions, et s'enfonçant dans la direction axiale (60), laquelle rainure est réalisée pour la liaison fonctionnelle avec l'autre partie du dispositif de liaison (20) au niveau du boîtier de filtre (110), ou
dans lequel la partie du dispositif de liaison (20) au niveau du joint (14) présente une nervure (44) s'étendant de manière circonférentielle, au moins dans certaines régions, et s'écartant du joint (14) dans la direction axiale (60), dans lequel, éventuellement, la rainure (40) et/ou la nervure (44) présentent une contre-dépouille (42, 46).

9. Système de filtration (100) permettant de filtrer un fluide, comportant un boîtier de filtre (110) et au moins un élément filtrant (10), en particulier un élément secondaire, disposé de manière à être remplaçable dans le boîtier de filtre (110), pour la filtration d'un fluide, selon l'une des revendications précédentes, comportant au moins un corps de milieu filtrant (12),
dans lequel le boîtier de filtre (110) présente une rainure d'étanchéité (120) circonférentielle dans laquelle est reçu, lors d'un montage de l'élément filtrant (10) conforme à l'utilisation, un joint (14) de l'élément filtrant (10),
dans lequel la rainure d'étanchéité (120) du boîtier de filtre (110) présente au moins une partie d'un dispositif de liaison (20) assurant un verrouillage par complémentarité de forme dans la direction axiale (60), laquelle partie est réalisée de manière à correspondre à une autre partie du dispositif de liaison (20) au niveau de l'au moins un élément filtrant (10), en particulier dans lequel le dispositif de liaison (20) est réalisé en tant que liaison à encliquetage.

10. Système de filtration selon la revendication 9, dans lequel la partie du dispositif de liaison (20) au niveau du boîtier de filtre (110) présente une pluralité d'éléments d'encliquetage (22) faisant saillie obliquement, en particulier perpendiculairement, à la direction axiale (60), lesquels sont réalisés pour la liaison fonctionnelle avec l'autre partie du dispositif de liaison (20) au niveau de l'élément filtrant (10).

11. Système de filtration selon la revendication 10, dans lequel les éléments d'encliquetage (22) sont réalisés en tant que renfoncements (26) ou picots (24) faisant saillie obliquement, en particulier perpendiculairement, à la direction axiale (60).

12. Système de filtration selon la revendication 9, dans lequel la partie du dispositif de liaison (20) au niveau du boîtier de filtre (110) présente une nervure (32) s'étendant obliquement, en particulier perpendiculairement, à la direction axiale (60), laquelle nervure est réalisée pour la liaison fonctionnelle avec l'autre partie du dispositif de liaison (20) au niveau de l'élément filtrant (10), ou
dans lequel la partie du dispositif de liaison (20) présente une saillie (30) s'étendant obliquement, en particulier perpendiculairement, à la direction axiale (60) et comportant une contre-dépouille (34).

13. Système de filtration selon la revendication 12, dans lequel la nervure (32) ou la saillie (30) est réalisée de manière à s'étendre de manière circonférentielle, au moins dans certaines régions.

14. Système de filtration selon la revendication 9, dans lequel la partie du dispositif de liaison (20) au niveau du boîtier de filtre (110) présente une nervure (44) s'étendant de manière circonférentielle, au moins dans certaines régions, et faisant saillie dans la direction axiale (60), laquelle nervure est réalisée pour la liaison fonctionnelle avec l'autre partie du dispositif de liaison (20) au niveau de l'élément filtrant (10), ou
dans lequel la partie du dispositif de liaison (20) au niveau du boîtier de filtre (110) présente une rainure (40) s'étendant de manière circonférentielle, au moins dans certaines régions, et s'enfonçant dans la direction axiale (60), en particulier dans lequel les angles de la rainure d'étanchéité (120) sont dégagés du dispositif de liaison (20).

15. Système de filtration selon la revendication 14, dans lequel la nervure (44) ou la rainure (40) présente une contre-dépouille (42, 46).
